# FASCICULE DE BREVET EUROPEEN

(11) **EP 3 233 441 B1**
(45) Date de publication et mention de la délivrance du brevet: **27.11.2024**
(21) Numéro de dépôt: 15808675.1
(22) Date de dépôt: 15.12.2015
(51) Int. Cl.: B29C 70/68, B29C 70/54, B29C 33/12

(54) **PROCEDE DE FABRICATION D'UN ELEMENT EN MATERIAU COMPOSITE**
VERFAHREN ZUR HERSTELLUNG EINES VERBUNDMATERIALELEMENTS
METHOD FOR MANUFACTURING A COMPOSITE MATERIAL ELEMENT

(30) Priorité: 17.12.2014 FR 1402891
(43) Date de publication de la demande: 25.10.2017
(73) Titulaire: NAVAL GROUP, 75015 Paris (FR)
(72) Inventeur: ROSSO, Fabien, 29700 Pluguffan (FR); LUCAS, Dominique, 56100 Lorient (FR)
(74) Mandataire: Lavoix
(86) Numéro de dépôt international: PCT/EP2015/079798
(87) Numéro de publication internationale: WO 2016/096862

(56) Documents cités:
- EP-A1- 1 508 429
- WO-A1-97/25172
- WO-A2-2011/158172
- WO-A2-2011/158172
- WO-A2-2012/001660
- WO-A2-2012/001660
- DE-A1- 102013 005 649
- DE-A1- 102013 005 649
- FR-A1- 2 664 529
- JP-A- S6 342 819
- US-A- 5 700 337
- US-B2- 8 133 029

## Description

La présente invention concerne un procédé de fabrication d'un élément en matériau composite.

On connaît déjà, dans l'état de la technique, un procédé de fabrication comportant une étape de drapage d'un renfort fibreux, en une pluralité de couches superposées. Le procédé comporte également une étape d'apport de résine dans le renfort fibreux. Cette étape d'apport de résine peut être préalable à l'étape de drapage, notamment dans le cas où on utilise un renfort fibreux pré-imprégné, ou ultérieur à l'étape de drapage. Le procédé comporte ensuite une étape de polymérisation de la résine.

Dans certains cas, il est nécessaire de réaliser un orifice dans l'élément composite fabriqué, par exemple afin d'y introduire un insert. Cela est notamment le cas dans le cadre de la fabrication de pales hydroliennes, de telles pales étant généralement fixées sur un élément composite.

Un tel orifice est généralement réalisé au cours d'une étape de perçage, faisant suite à ladite étape de polymérisation. Une telle étape de perçage est relativement difficile à mettre en oeuvre, notamment du fait de problèmes d'ordre technique, matériel et économique, plus particulièrement dans le cas de structures composites présentant une forte épaisseur. En effet, le perçage d'un élément composite de forte épaisseur nécessite des outils spécifiques particulièrement onéreux. Ainsi, l'étape de perçage d'un élément composite peut représenter jusqu'à 15% du coût total du procédé de fabrication de cet élément composite.

On connaît également, d'après WO 2012/001660, un procédé de fabrication d'un élément en matériau composite, similaire au préambule de la revendication 1.

L'invention a notamment pour but de remédier à l'inconvénient précité, en proposant un procédé de fabrication d'un élément en matériau composite, comportant au moins un orifice réalisé de manière simple et économique.

A cet effet, l'invention a pour objet un procédé de fabrication d'un élément en matériau composite selon la revendication 1.

L'invention propose de réaliser des découpes dans le renfort fibreux préalablement à son drapage. De telles découpes, réalisées dans un renfort fibreux de faible épaisseur, sont simples à réaliser, et cela sans nécessiter d'outil onéreux.

Au cours du procédé selon l'invention, les découpes sont superposées autour d'un insert, dont la présence permet d'assurer que la résine apportée dans le renfort fibreux ne s'écoule pas dans l'orifice réalisé par la superposition des découpes.

Cet insert peut ensuite être extrait de l'élément fabriqué, ou être conservé dans cet élément, par exemple pour la fixation d'une pale hydrolienne.

Il est à noter que certaines couches sont dépourvues de découpe, l'insert étant au moins en partie longitudinal, l'important étant que les découpes forment ensemble un logement pour l'insert.

Un procédé de fabrication selon l'invention peut comporter en outre l'une ou plusieurs des caractéristiques suivantes, prises seules ou selon toutes combinaisons techniquement envisageables.
- L'insert comporte un insert transversal présentant une forme générale cylindrique, s'étendant sensiblement perpendiculairement aux couches de renfort fibreux.
- Le procédé de fabrication comporte, suite à l'étape de polymérisation, une étape d'extraction de l'insert transversal depuis son logement.
- L'étape de drapage étant réalisée en superposant les couches de renfort fibreux dans un moule, ledit insert transversal est agencé dans le moule préalablement à l'étape de drapage, sensiblement perpendiculairement aux couches de renfort fibreux, l'étape de drapage étant réalisée en passant chaque découpe autour de l'insert transversal.
- Les découpes sont dimensionnées pour recevoir l'insert transversal entouré d'un tube pultrudé et/ou d'un renfort fibreux tubulaire.
- L'insert transversal comporte un orifice taraudé, s'étendant parallèlement aux couches de renfort fibreux.
- L'insert longitudinal présente une forme de tige filetée.
- L'étape de drapage est réalisée dans un moule comportant un élément de support propre à supporter une partie de l'insert longitudinal depuis l'étape intermédiaire d'agencement.
- L'insert comporte un insert transversal muni d'un orifice taraudé, et un insert longitudinal assemblé à l'insert transversal par vissage dans l'orifice taraudé, et :
   - l'étape de drapage comporte tout d'abord la superposition d'une pluralité de couches dépourvues de secondes découpes pour l'insert longitudinal, mais pourvues de premières découpes pour l'insert transversal,
   - l'étape de drapage est poursuivie par la superposition d'une pluralité de couches pourvues de secondes découpes pour l'insert longitudinal et de premières découpes pour l'insert transversal,
   - le procédé comporte une étape intermédiaire d'agencement des inserts longitudinal et transversal assemblés, dans les découpes correspondantes des couches précédemment superposées,
   - l'étape de drapage est poursuivie, par la superposition de l'ensemble des couches pourvues de secondes découpes pour l'insert longitudinal, ces secondes découpes étant disposées autour de l'insert longitudinal, et pourvues de premières découpes pour l'insert transversal, ces premières découpes étant disposées autour de l'insert transversal,
   - l'étape de drapage est poursuivie par la superposition du reste de couches dépourvues de secondes découpes pour l'insert longitudinal et pourvues de premières découpes pour l'insert transversal, ces premières découpes étant disposées autour de l'insert transversal.

L'invention sera mieux comprise à la lecture de la description qui va suivre, donnée uniquement à titre d'exemple et faite en se référant aux figures annexées parmi lesquelles :
- la figure 1 est une vue schématique en coupe d'un élément composite au cours d'une étape d'un procédé de fabrication selon un premier exemple de mode de réalisation non revendiqué;
- les figures 2 et 3 sont des vues schématique en coupe d'un élément composite au cours de deux étapes distinctes d'un procédé selon un deuxième exemple de mode de réalisation de l'invention ;
- les figures 4 et 5 sont des vues similaires aux figures 2 et 3 d'un élément composite au cours de deux étapes distinctes d'un procédé selon un troisième exemple de mode de réalisation de l'invention ;
- la figure 6 est une vue en coupe d'un élément composite réalisé selon une variante du premier exemple de mode de réalisation.

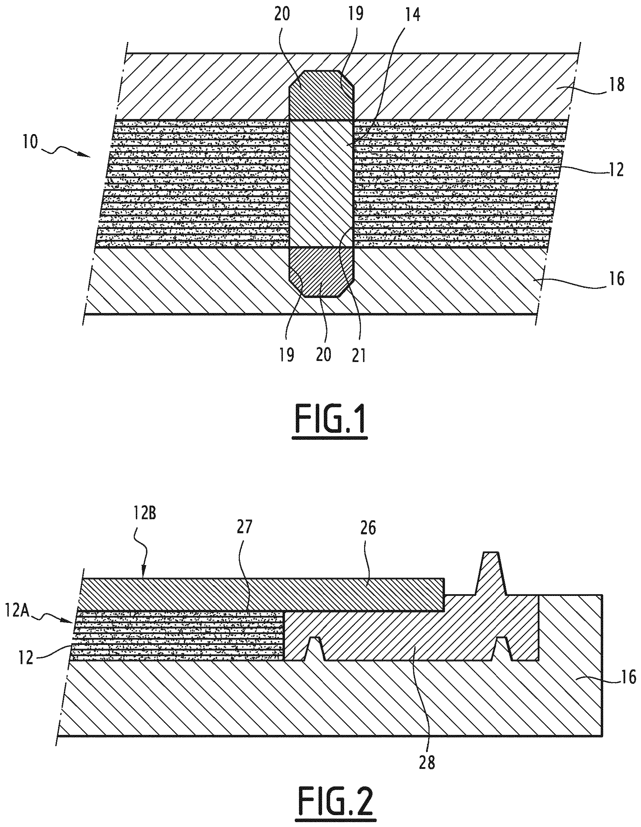

Sur la figure 1, un élément 10 en matériau composite est représenté au cours d'une étape d'un procédé de fabrication selon un premier exemple de mode de réalisation non revendiqué;
L'élément composite 10 comporte un renfort, formé par un empilement d'une pluralité de couches d'un renfort fibreux 12, par exemple un tissu de renfort 12, destiné à être liées par une résine de manière classique.

Un insert transversal 14 traverse le renfort fibreux 12, perpendiculairement auxdites couches. Par exemple, l'insert transversal 14 présente une forme générale cylindrique à section sensiblement circulaire, s'étendant perpendiculairement aux couches du renfort fibreux 12.

L'élément composite 10 est représenté dans un moule comprenant une partie inférieure de moule 16 et une partie supérieure de moule 18.

Ledit moule est de type classique, à l'exception du fait qu'il comporte de préférence, dans chacune de ses parties de moule inférieure 16 et supérieure 18, un emplacement 19 pour un pion 20 respectif de centrage de l'insert 14.

Chaque pion de centrage 20 est solidarisé à une extrémité de l'insert 14, par exemple par vissage, et logé dans l'un respectif des emplacements 19 afin de permettre un maintien de l'insert transversal 14 en position.

L'élément composite 10 est fabriqué au cours d'un procédé de fabrication qui va maintenant être décrit.

Le procédé de fabrication comporte tout d'abord une étape de réalisation de premières découpes de forme prédéterminée dans le renfort fibreux 12. Dans le cas de l'élément 10 de la figure 1, chaque première découpe présente une forme correspondant à la section de l'insert transversal 14. Ainsi, dans l'exemple représenté, chaque première découpe présente une forme circulaire, de diamètre par exemple légèrement supérieur au diamètre de l'insert transversal 14, ou en variante légèrement inférieur, en fonction de l'élasticité du renfort fibreux et de la densité de fibres souhaitée autour de l'insert.

Le procédé comporte ensuite une étape de drapage du renfort fibreux 12, de manière à former une pluralité de couches superposées. Le drapage est par exemple réalisé de manière classique, par pliage du renfort fibreux 12 sur la partie inférieure de moule 16.

Cette étape de drapage est réalisée de sorte que chaque couche de renfort fibreux présente une première découpe, les premières découpes des différentes couches étant superposées en regard les unes des autres de manière à former ensemble un premier logement 21 pour l'insert transversal 14.

Il est à noter que l'insert transversal 14 est avantageusement positionné sur la partie inférieure de moule 16 préalablement à l'étape de drapage, en disposant l'un des pions de centrage 20 dans l'emplacement 19 correspondant, l'autre pion 20 étant également monté sur l'insert 14. Dans ce cas, l'étape de drapage est réalisée en passant chaque première découpe autour de l'insert transversal 14. Les deux pions de centrage 20 sont solidarisés avec l'insert 14 le temps du drapage et du moulage de la pièce, puis désolidarisés au démoulage.

Au terme de l'étape de drapage, le moule est refermé en rapportant la partie supérieure de moule 18 au-dessus du renfort fibreux 12 drapé, en introduisant ledit autre pion de centrage 20 dans l'emplacement 19 correspondant ménagé dans cette partie supérieure de moule 18.

Le procédé comporte ensuite, de manière classique, une étape d'apport de résine dans le renfort fibreux 12, par exemple par infusion. Du fait de la présence de l'insert transversal 14, la résine ne s'écoule pas dans le premier logement 21 défini par les premières découpes. En variante, l'étape d'apport de résine est préalable à l'étape de drapage. Cela est notamment le cas lorsque le renfort fibreux 12 est pré-imprégné.

Le procédé comporte ensuite une étape classique de polymérisation de la résine.

L'élément composite ainsi réalisé est ensuite extrait du moule, et les pions de centrage 20 sont dévissés de l'insert 14.

L'insert transversal 14 peut alors être extrait depuis son logement 21 au cours d'une étape d'extraction. On obtient ainsi un élément composite 10 comportant un orifice traversant présentant les mêmes dimensions que l'insert 14.

En variante, l'insert transversal 14 peut être conservé dans l'élément composite 10.

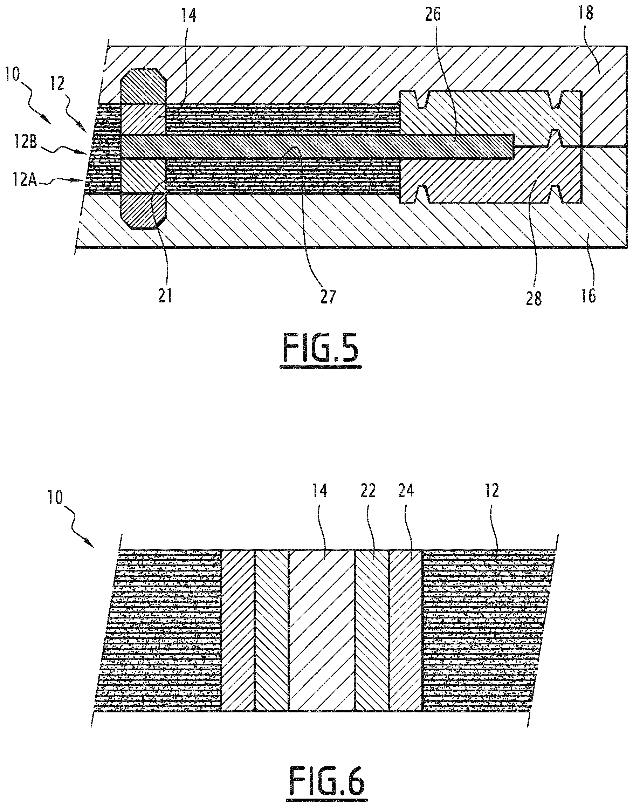

Conformément à une variante, représentée sur la figure 6, les premières découpes sont dimensionnées pour recevoir l'insert transversal 14 entouré d'un tube pultrudé 22 et/ou d'un renfort fibreux tubulaire 24. Dans ce cas, après extraction de l'insert 14, l'orifice traversant est consolidé par ce tube pultrudé et/ou ce renfort fibreux tubulaire.

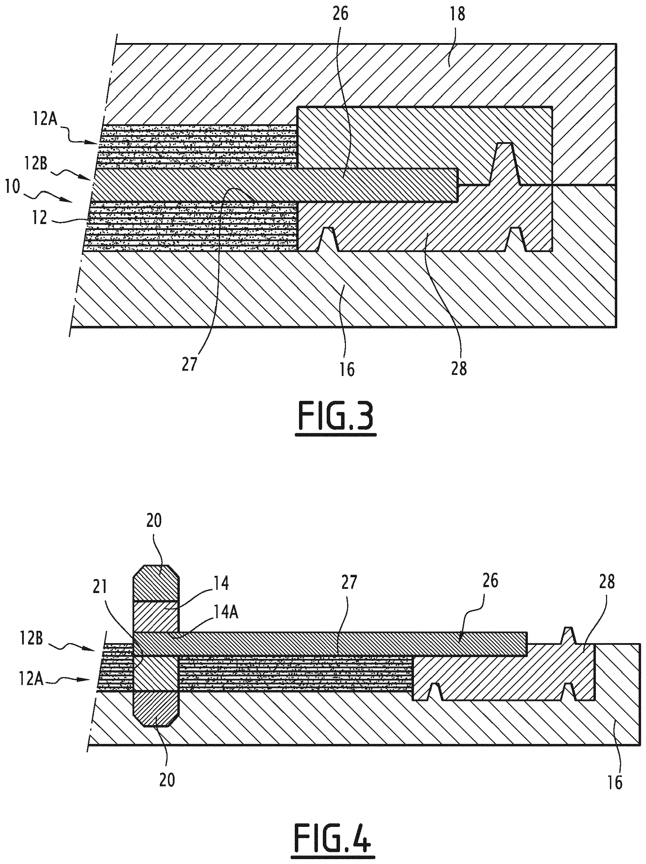

On a représenté, sur les figures 2 et 3, un élément composite au cours d'un procédé de fabrication selon un deuxième exemple de mode de réalisation de l'invention. Sur ces figures, les éléments analogues à ceux de la figure précédente sont désignés par des références identiques.

Conformément à ce deuxième mode de réalisation, l'insert est un insert longitudinal 26, présentant une forme générale cylindrique, notamment à section circulaire. L'insert longitudinal 26 est par exemple formé par une tige filetée. Cet insert longitudinal 26 s'étend parallèlement aux couches de renfort fibreux 12.

Ainsi, l'étape de réalisation de découpes comporte la réalisation de secondes découpes longitudinales dans le renfort fibreux 12, ces secondes découpes longitudinales présentant des largeurs augmentant d'une couche à l'autre de sorte que la superposition de ces secondes découpes forme un second logement 27 de forme complémentaire à celle de l'insert longitudinal 26.

L'étape de drapage comporte tout d'abord la superposition d'une pluralité de couches 12A de renfort fibreux 12 dépourvues de secondes découpes pour l'insert longitudinal 26.

L'étape de drapage comporte ensuite la superposition d'une pluralité de couches 12B pourvues de secondes découpes pour l'insert longitudinal 26, comme cela est représenté sur la figure 2. Les secondes découpes sont superposées les unes en regard des autres, leur largeur augmentant, de manière à former une première moitié d'un second logement 27 de réception de l'insert longitudinal 26.

A ce stade, l'épaisseur de couches 12A, 12B superposées correspond sensiblement à la moitié de l'épaisseur totale de l'élément composite 10 à fabriquer.

Le procédé comporte ensuite une étape intermédiaire d'agencement de l'insert longitudinal 26 dans ladite première moitié du logement 27.

Habituellement, l'insert longitudinal 26 est destiné à s'étendre au-delà de l'élément composite 10. Ainsi, cet insert longitudinal 26 n'est logé que partiellement dans le second logement 27 formé par les secondes découpes.

A cet effet, le moule comporte avantageusement un élément 28 de support de la partie de l'insert longitudinal 26 qui s'étend au-delà de l'élément composite 10, permettant un maintien de l'insert longitudinal 26 en position.

Suite à cette étape intermédiaire d'agencement de l'insert longitudinal 26, l'étape de drapage est poursuivie, en superposant l'ensemble des couches 12B pourvues de secondes découpes longitudinales, ces secondes découpes étant disposées autour de l'insert longitudinal 26 jusqu'à refermer le second logement 27.

L'étape de drapage est poursuivie par la superposition du reste de couches 12A dépourvues de secondes découpes.

Le procédé comporte ensuite, de la même manière que précédemment, une étape d'apport de résine dans le renfort fibreux et une étape de polymérisation de cette résine. Comme précédemment, en variante, le renfort fibreux est pré-imprégné.

L'élément composite 10 peut alors être extrait du moule. On notera que, dans le cas où l'insert longitudinal 26 est fileté, cet insert longitudinal 26 est maintenu longitudinalement dans la résine. En variante, l'insert longitudinal 26 peut être extrait depuis son logement 27.

On a représenté sur les figures 4 et 5 un procédé de fabrication selon un troisième exemple de mode de réalisation de l'invention. Sur ces figures, les éléments analogues à ceux des figures précédentes sont désignés par des références identiques.

Conformément à ce troisième mode de réalisation, l'insert comporte à la fois un insert transversal 14, muni d'un orifice taraudé 14A, et un insert longitudinal 26 formant une tige filetée, assemblé avec l'insert transversal 14 par vissage dans l'orifice taraudé 14A.

Dans ce cas, le renfort fibreux 12 comporte à la fois des premières découpes destinées à recevoir l'insert transversal 14, et des secondes découpes longitudinales destinées à recevoir l'insert longitudinal 26.

Par ailleurs, le moule est à la fois pourvu d'emplacements 19 pour recevoir des pions de centrage 20 solidarisés à l'insert transversal 14, et d'un élément de support 28 pour l'insert longitudinal 26.

Dans ce cas, l'étape de drapage comporte tout d'abord la superposition d'une pluralité de couches 12A dépourvues de secondes découpes longitudinales mais pourvues de premières découpes pour l'insert transversal 14.

Cette étape de drapage est poursuivie par la superposition d'une pluralité de couches 12B pourvues de secondes découpes pour l'insert longitudinal 26 et de premières découpes pour l'insert transversal 14.

Le procédé comporte ensuite une étape intermédiaire d'agencement des inserts longitudinal 26 et transversal 14 assemblés, dans les première ou secondes découpes correspondantes des couches 12A, 12B précédemment superposées.

L'étape de drapage est ensuite poursuivie, par la superposition de l'ensemble des couches 12B pourvues de secondes découpes pour l'insert longitudinal 26, ces secondes découpes étant disposées autour de l'insert longitudinal 26, et pourvues de premières découpes pour l'insert transversal 14, ces premières découpes étant disposées autour de cet insert transversal 14.

L'étape de drapage est poursuivie par la superposition du reste de couches 12A dépourvues de secondes découpes pour l'insert longitudinal 26 et pourvues de premières découpes pour l'insert transversal 14, ces premières découpes étant disposées autour de l'insert transversal 14, comme cela est représenté sur la figure 5.

Le procédé comporte ensuite, de la même manière que précédemment, une étape d'apport de résine dans le renfort fibreux 12 et une étape de polymérisation de la résine.

L'élément composite 10 est ensuite extrait du moule. Les pions de centrage 20 sont dévissés de l'insert transversal 14.

L'insert formé par l'insert transversal 14 assemblé à l'insert longitudinal 26 est maintenu dans l'élément composite 10. Plus particulièrement, l'insert transversal 14 est maintenu transversalement par l'insert longitudinal 26, et l'insert longitudinal 26 est maintenu longitudinalement par l'insert transversal 14.

L'insert longitudinal 26 peut alors être utilisé pour la fixation d'une pale hydrolienne, cette pale étant solidarisée à la fois transversalement et longitudinalement, par les inserts 14, 26, avec l'élément composite 10.

On notera que l'invention n'est pas limitée au mode de réalisation précédemment décrit, mais pourrait présenter diverses variantes.

## Revendications

1. Procédé de fabrication d'un élément (10) en matériau composite, comportant :
- une étape de drapage d'un renfort fibreux (12), en une pluralité de couches superposées,
- une étape d'apport de résine dans le renfort fibreux (12), préalablement ou ultérieurement à l'étape de drapage, et
- une étape de polymérisation de la résine,
et dans lequel :
- le procédé comporte, préalablement à l'étape de drapage, une étape de réalisation de découpes de forme prédéterminée dans le renfort fibreux (12),
- au cours de l'étape de drapage, les couches de renfort fibreux (12) sont superposées en mettant les découpes en regard les unes des autres, l'ensemble des découpes des couches superposées formant un logement (21, 27) au moins pour un insert (14, 26),
**caractérisé en ce que** :
- l'insert comporte un insert longitudinal (26) présentant une forme générale cylindrique s'étendant parallèlement aux couches de renfort fibreux (12),
- l'étape de drapage comporte tout d'abord la superposition d'une pluralité de couches (12A) dépourvues de découpes pour l'insert longitudinal (26),
- l'étape de drapage est poursuivie par la superposition d'une pluralité de couches (12B) pourvues de découpes pour l'insert longitudinal (26),
- le procédé comporte une étape intermédiaire d'agencement de l'insert longitudinal (26) dans les découpes des couches (12B) pourvues de découpes précédemment superposées,
- l'étape de drapage est poursuivie, par la superposition de l'ensemble des couches (12) pourvues de découpes pour l'insert longitudinal (26), ces découpes étant disposées autour de l'insert longitudinal (26),
- l'étape de drapage est poursuivie par la superposition du reste de couches (12A) dépourvues de découpe.

2. Procédé de fabrication selon la revendication 1, dans lequel l'insert comporte un insert transversal (14) présentant une forme générale cylindrique, s'étendant sensiblement perpendiculairement aux couches de renfort fibreux (12).

3. Procédé de fabrication selon la revendication 2, comportant, suite à l'étape de polymérisation, une étape d'extraction de l'insert transversal (14) depuis son logement (21).

4. Procédé de fabrication selon la revendication 2 ou 3, dans lequel, l'étape de drapage étant réalisée en superposant les couches de renfort fibreux (12) dans un moule (16, 18), ledit insert transversal (14) est agencé dans le moule préalablement à l'étape de drapage, sensiblement perpendiculairement aux couches de renfort fibreux (12), l'étape de drapage étant réalisée en passant chaque découpe autour de l'insert transversal (14).

5. Procédé de fabrication selon l'une quelconque des revendications 2 à 4, dans lequel les découpes sont dimensionnées pour recevoir l'insert transversal (14) entouré d'un tube pultrudé (22) et/ou d'un renfort fibreux tubulaire (24).

6. Procédé de fabrication selon la revendication 2, dans lequel l'insert transversal (14) comporte un orifice taraudé (14A), s'étendant parallèlement aux couches de renfort fibreux (12).

7. Procédé de fabrication selon la revendication 6, dans lequel l'insert longitudinal (26) présente une forme de tige filetée.

8. Procédé de fabrication selon l'une quelconque des revendications précédentes, dans lequel l'étape de drapage est réalisée dans un moule comportant un élément de support (28) propre à supporter une partie de l'insert longitudinal (26) depuis l'étape intermédiaire d'agencement.

9. Procédé de fabrication selon la revendication 7, dans lequel l'insert comporte l'insert longitudinal (26) assemblé à l'insert transversal (14) par vissage dans l'orifice taraudé (14A), et dans lequel :
- l'étape de drapage comporte tout d'abord la superposition d'une pluralité de couches (12A) dépourvues de secondes découpes pour l'insert longitudinal (26), mais pourvues de premières découpes pour l'insert transversal (14),
- l'étape de drapage est poursuivie par la superposition d'une pluralité de couches (12B) pourvues de secondes découpes pour l'insert longitudinal (26) et de premières découpes pour l'insert transversal (14),
- le procédé comporte une étape intermédiaire d'agencement des inserts longitudinal (26) et transversal (14) assemblés, dans les découpes correspondantes des couches (12A, 12B) précédemment superposées,
- l'étape de drapage est poursuivie, par la superposition de l'ensemble des couches (12B) pourvues de secondes découpes pour l'insert longitudinal (26), ces secondes découpes étant disposées autour de l'insert longitudinal (26), et pourvues de premières découpes pour l'insert transversal (14), ces premières découpes étant disposées autour de l'insert transversal (14),
- l'étape de drapage est poursuivie par la superposition du reste de couches (12A) dépourvues de secondes découpes pour l'insert longitudinal (26) et pourvues de premières découpes pour l'insert transversal (14), ces premières découpes étant disposées autour de l'insert transversal (14).

## Patentansprüche

1. Verfahren zur Herstellung eines Elements (10) aus Verbundmaterial, umfassend:
- einen Drapierschritt einer Faserverstärkung (12) in einer Vielzahl von übereinander liegenden Schichten,
- einen Einbringungsschritt von Harz in die Faserverstärkung (12) vor oder nach dem Drapierschritt, und
- einen Polymerisationsschritt des Harzes,
und wobei:
- das Verfahren vor dem Drapierschritt einen Herstellungsschritt von Ausschnitten mit vorbestimmter Form in der Faserverstärkung (12) umfasst,
- wobei die Faserverstärkungsschichten (12) während des Drapierschritts übereinandergelegt werden, indem die Ausschnitte einander gegenübergestellt werden, wobei die Gesamtheit der Ausschnitte der übereinandergelegten Schichten eine Aufnahme (21, 27) für mindestens einen Einsatz (14, 26) bildet,
**dadurch gekennzeichnet, dass**:
- der Einsatz einen Längseinsatz (26) umfasst, der eine allgemein zylindrische Form aufweist, der sich parallel zu den Faserverstärkungsschichten (12) erstreckt,
- der Drapierschritt zunächst das Übereinanderlegen einer Vielzahl von Schichten (12A) umfasst, die keine Ausschnitte für den Längseinsatz (26) besitzen,
- der Drapierschritt fortgesetzt wird, indem eine Vielzahl von Schichten (12B) übereinandergelegt werden, die mit Ausschnitten für den Längseinsatz (26) versehen sind,
- das Verfahren einen Zwischenschritt eines Anordnens des Längseinsatzes (26) in den Ausschnitten der Schichten (12B) umfasst, die mit zuvor übereinander liegenden Ausschnitten versehen sind,
- der Drapierschritt fortgesetzt wird, indem alle Schichten (12), die mit Ausschnitten für den Längseinsatz (26) versehen sind, übereinandergelegt werden, wobei diese Ausschnitte um den Längseinsatz (26) angeordnet sind,
- der Drapierschritt mit dem Übereinanderlegen der restlichen Schichten (12A) ohne Ausschnitt fortgesetzt wird.

2. Herstellungsverfahren nach Anspruch 1, wobei der Einsatz einen Quereinsatz (14) umfasst, der eine allgemein zylindrische Form aufweist, der sich im Wesentlichen senkrecht zu den Faserverstärkungsschichten (12) erstreckt.

3. Herstellungsverfahren nach Anspruch 2, umfassend nach dem Polymerisationsschritt einen Herausnahmeschritt des Quereinsatzes (14) aus seiner Aufnahme (21).

4. Herstellungsverfahren nach Anspruch 2 oder 3, wobei der Drapierschritt durch Übereinanderlegen der Faserverstärkungsschichten (12) in einer Form (16, 18) durchgeführt wird, wobei der Quereinsatz (14) in der Form vor dem Drapierschritt im Wesentlichen senkrecht zu den Faserverstärkungsschichten (12) angeordnet ist, wobei der Drapierschritt durchgeführt wird, indem jeder Ausschnitt um den Quereinsatz (14) herumgeführt wird.

5. Herstellungsverfahren nach einem der Ansprüche 2 bis 4, wobei die Ausschnitte bemessen sind, um den Quereinsatz (14) aufzunehmen, der von einem pultrudierten Rohr (22) und/oder einer rohrförmigen Faserverstärkung (24) umgeben ist.

6. Herstellungsverfahren nach Anspruch 2, wobei der Quereinsatz (14) eine Gewindeöffnung (14A) umfasst, die sich parallel zu den Faserverstärkungsschichten (12) erstreckt.

7. Herstellungsverfahren nach Anspruch 6, wobei der Längseinsatz (26) die Form einer Gewindestange aufweist.

8. Herstellungsverfahren nach einem der vorherigen Ansprüche, wobei der Drapierenschritt in einer Form durchgeführt wird, umfassend ein Stützelement (28), das geeignet ist, um einen Teil des Längseinsatzes (26) nach dem Anordnungszwischenschritt zu stützen.

9. Herstellungsverfahren nach Anspruch 7, wobei der Einsatz den Längseinsatz (26) umfasst, der mit dem Quereinsatz (14) durch Einschrauben in die Gewindeöffnung (14A) verbunden ist, und wobei:
- der Drapierschritt zunächst das Übereinanderlegen einer Vielzahl von Schichten (12A) umfasst, die keine zweiten Ausschnitte für den Längseinsatz (26), aber erste Schnitte für den Quereinsatz (14) aufweisen,
- der Drapierschritt fortgesetzt wird, indem eine Vielzahl von Schichten (12B) übereinandergelegt werden, die mit zweiten Ausschnitten für den Längseinsatz (26) und ersten Ausschnitten für den Quereinsatz (14) versehen sind,
- das Verfahren einen Anordnungszwischenschritt der zusammengesetzten Längs- (26) und Quereinsätze (14) in den entsprechenden Ausschnitten der zuvor übereinandergelegten Schichten (12A, 12B) umfasst,
- der Drapierschritt fortgesetzt wird, indem alle Schichten (12B), die mit zweiten Ausschnitten für den Längseinsatz (26) versehen sind, übereinandergelegt werden, wobei diese zweiten Ausschnitte um den Längseinsatz (26) angeordnet sind, und mit ersten Ausschnitten für den Quereinsatz (14) versehen sind, wobei die ersten Ausschnitte um den Quereinsatz (14) angeordnet sind,
- der Drapierschritt fortgesetzt wird, indem der Rest der Schichten (12A), die keine zweiten Ausschnitte für den Längseinsatz (26) aufweisen und mit ersten Schnitten für den Quereinsatz (14) versehen sind, übereinandergelegt wird, wobei die ersten Schnitte um den Quereinsatz (14) angeordnet werden.

## Claims

1. A method for manufacturing an element (10) in a composite material, including:
- a step for draping a fiber reinforcement (12), in a plurality of superposed layers,
- a step for providing resin in the fiber reinforcement (12), prior or subsequently to the draping step, and
- a step for polymerizing the resin,
and wherein:
- the method includes, prior to the draping step, a step for making cutouts of a predetermined shape in the fiber reinforcement (12),
- during the draping step, the layers of fiber reinforcement (12) are superposed by putting the cutouts facing each other, the whole of the cutouts of the superposed layers forming a housing (21, 27) at least for an insert (14, 26),
**characterized in that**:
- the insert includes a longitudinal insert (26) having a general cylindrical shape extending parallel to the layers of fiber reinforcement (12),
- the draping step first of all includes the superposition of a plurality of layers (12A) without any cutouts for the longitudinal insert (26),
- the draping step is continued by the superposition of a plurality of layers (12B) provided with cutouts for the longitudinal insert (26),
- the method includes an intermediate step for laying out the longitudinal insert (26) in the cutouts of the layers (12B) provided with cutouts superposed beforehand,
- the draping step is continued by the superposition of the whole of the layers (12) provided with cutouts for the longitudinal insert (26), these cutouts being positioned around the longitudinal insert (26),
- the draping step is continued by the superposition of the remainder of layers (12A) without any cutouts.

2. The manufacturing method according to claim 1, wherein the insert includes a transverse insert (14) having a general cylindrical shape, extending substantially perpendicularly to the layers of fiber reinforcement (12).

3. The manufacturing method according to claim 1 or 2, including, following the polymerization step, a step for extracting the transverse insert (14) from its housing (21).

4. The manufacturing method according to claim 2 or 3, wherein, the draping step being achieved by superposing the layers of fiber reinforcement (12) in a mould (16, 18), said transverse insert (14) is laid out in the mould prior to the draping step, substantially perpendicularly to the layers of fiber reinforcement (12), the draping step being achieved by having each cutout pass around the transverse insert (14).

5. The manufacturing method according to any of claims 2 to 4, wherein the cutouts are dimensioned for receiving the transverse insert (14) surrounded by a pultruded tube (22) and/or a tubular fiber reinforcement (24).

6. The manufacturing method according to any of claims 2 to 4, wherein the transverse insert (14) includes a tapped orifice (14A), extending parallel to the layers of fiber reinforcement (12).

7. The manufacturing method according to any of the preceding claims, wherein the longitudinal insert (26) has a threaded rod shape.

8. The manufacturing method according to any of the preceding claims, wherein the draping step is achieved in a mould including a supporting element (28) able to support a portion of the longitudinal insert (26) from the intermediate layout step.

9. The manufacturing method according to claim 7, wherein the insert includes the longitudinal insert (26) assembled to the transverse insert (14) by screwing into the tapped orifice (14A), and wherein:
- the draping step first of all includes the superposition of a plurality of layers (12A) without any second cutouts for the longitudinal insert (26), but provided with first cutouts for the transverse insert (14),
- the draping step is continued by the superposition of a plurality of layers (12B) provided with second cutouts for the longitudinal insert (26) and with first cutouts for the transverse insert (14),
- the method includes an intermediate step for laying out the assembled longitudinal (26) and transverse (14) inserts, into the corresponding cutouts of the layers (12A, 12B) superposed beforehand,
- the draping step is continued by the superposition of the whole of the layers (12B) provided with second cutouts for the longitudinal insert (26), these second cutouts being positioned around the longitudinal insert (26), and provided with first cutouts for the transverse insert (14), these first cutouts being positioned around the transverse insert (14),
- the draping step is continued by the superposition of the remainder of layers (12A) without any second cutouts for the longitudinal insert (26) and provided with first cutouts for the transverse insert (14), these first cutouts being positioned around the transverse insert (14).
